**Europäisches Patentamt**

(19) **European Patent Office**

**Office européen des brevets**

(11) Veröffentlichungsnummer: **0 006 083**
**B1**

(12) **EUROPÄISCHE PATENTSCHRIFT**

(45) Veröffentlichungstag der Patentschrift:
26.08.81

(51) Int. Cl.³: **F 16 K 11/07** // F03B3/10

(21) Anmeldenummer: **79890005.6**

(22) Anmeldetag: **15.05.79**

(54) **Umschaltschieber.**

(30) Priorität: **05.06.78 AT 4051/78**

(43) Veröffentlichungstag der Anmeldung:
**12.12.79 Patentblatt 79/25**

(45) Bekanntmachung des Hinweises auf die Patenterteilung:
**26.08.81 Patentblatt 81/34**

(84) Benannte Vertragsstaaten:
**CH DE FR GB IT SE**

(56) Entgegenhaltungen:
**DE-B-1 209 380**
**DE-C-1 265 042**
**DE-U-1 923 194**
**DE-U-7 130 170**
**US-A-3 620 256**

(73) Patentinhaber: **VOEST-ALPINE Aktiengesellschaft,**
**Werksgelände, A-4010 Linz (AT)**

(72) Erfinder: **Lukesch, Norbert, Unionstrasse 65/4,**
**A-4020 Linz (AT)**

(74) Vertreter: **Hübscher, Gerhard, Dipl.-Ing. et al,**
**Patentanwälte Dipl.-Ing. Gerhard Hübscher Dipl.-Ing.**
**Helmut Hübscher Dipl.-Ing. Heiner Hübscher**
**Spittelwiese 7, A-4020 Linz (AT)**

## Umschaltschieber

Die Erfindung bezieht sich auf einen Umschaltschieber zum Anschliessen einer Leitung an ein senkrecht einmündendes Druckrohr einer Pumpe, mit einem Gehäuse und einem im Gehäuse mittels eines Motors verstellbaren Schieberkörper.

Soll beispielsweise das Druckrohr einer Pumpe an die Saugleitung einer Pumpenturbine angeschlossen werden, so muss eine Umschaltvorrichtung vorgesehen werden, die einerseits beim Turbinenbetrieb den Durchfluss des Saugrohres von der Turbine zum Unterwasser möglichst ohne Strömungsverluste sicherstellt und anderseits beim Pumpbetrieb die Wasserzuführung von der Pumpe zur Pumpenturbine gewährleistet, indem der vom Anschluss des Pumpendruckrohrs zum Unterwasser führende Ast des Saugrohres abgeschlossen und das angeschlossene Pumpendruckrohr geöffnet wird. Auch bei einer solchen Wasserführung soll selbstverständlich der Strömungswiderstand klein gehalten werden können, wozu noch kommt, dass für einen entsprechend dichten Verschluss des zum Unterwasser führenden Saugrohrastes gesorgt sein muss.

Der Erfindung liegt demnach die Aufgabe zugrunde, einen Umschaltschieber zum Anschliessen einer Leitung an ein senkrecht einmündendes Druckrohr einer Pumpe zu schaffen, der einfach aufgebaut ist und die gewünschten Verbindungen in strömungstechnisch günstiger Weise herzustellen erlaubt.

Die Erfindung löst die gestellte Aufgabe dadurch, dass das Gehäuse aus einem in die Leitung einsetzbaren Rohrkörper mit einem hinsichtlich seines Querschnittes im wesentlichen rechteckigen Mittelstück und aus einem senkrecht an eine Wand des Mittelstückes angesetzten, an die Pumpendruckleitung anschliessbaren, kreiszylindrischen Rohrstück besteht, dessen Durchmesser der Querschnittslänge der Wand entspricht, und dass der Schieberkörper im kreiszylindrischen Rohrstück axial verschiebbar geführt und aus einer koaxialen, halbkreiszylindrischen Mantelschale sowie aus einer kreisförmigen Stirnwand an der dem Mittelstück zugekehrten Seite der Mantelschale und einem Kreisring an der gegenüberliegenden Seite zusammengesetzt ist.

Da der Schieberkörper zufolge seiner Ausbildung gegen die Pumpe hin offen ist und gegen einen Ast der Leitung eine Durchtrittsöffnung aufweist, bildet der Schieberkörper den Verbindungskanal zwischen dem Pumpendruckrohr und dem einen Ast der Leitung, wobei der andere Ast der Leitung durch die Mantelschale des Schieberkörpers verschlossen ist. Wegen des im wesentlichen rechteckigen Querschnittes des Mittelstückes ergeben sich zwischen der Mantelschale des Schieberkörpers und den entsprechenden Wänden des Mittelstückes durchgehende Berührungsstellen, so dass der Schieberkörper in dieser Schaltstellung gegenüber dem Mittelstück durch entsprechende Dichtungen gut abgedichtet werden kann. Um eine umlaufende Dichtung zu erhalten, muss selbstverständlich auch die sich in dieser Schaltstellung des Schieberkörpers an die gegenüberliegende Wand des Mittelstückes anlegende Stirnwand des Schieberkörpers gegenüber dieser Wand und der Kreisring gegenüber der ihm zugehörigen Wand des Mittelstückes so abgedichtet werden, dass diese Dichtungen an die in Richtung der Erzeugenden der Mantelschale verlaufenden Dichtungen anschliessen. Wird der Schieberkörper aus dem Mittelstück herausgezogen, so verschliesst die Stirnwand des Schieberkörpers die Durchtrittsöffnung zwischen dem kreiszylindrischen Rohrstück und dem Mittelstück, so dass für den Turbinenbetrieb im wesentlichen ungestörte Verhältnisse in der als Saugrohr dienenden Leitung herrschen. Die vorzugsweise ebene Stirnwand des Schieberkörpers kann sich nämlich absatzlos in die Wandfläche des Mittelstückes einfügen, so dass sich für die Strömungsverhältnisse günstige, glatte Wände ergeben.

Wird in weiterer Ausbildung der Erfindung in der dem kreiszylindrischen Rohrstück gegenüberliegenden Wand eine Ausnehmung zur Aufnahme der Stirnwand des Schieberkörpers vorgesehen, so ergibt sich eine zusätzliche Abstützung des Schieberkörpers an dieser gegenüberliegenden Wand. Der auftretende Druck kann demnach in einfacher Weise auf das Gehäuse übertragen werden. Ausserdem ergibt sich durch diese Ausnehmung zwangsweise eine genaue Lage des Schieberkörpers in der das Pumpendruckrohr mit der Leitung verbindenden Schaltstellung, was die gute Abdichtung des Schieberkörpers gegenüber dem Gehäuse unterstützt.

Damit der Strömungswiderstand auf Grund dieser Ausnehmung nicht wesentlich erhöht wird, sollte die Tiefe der Ausnehmung klein bleiben. Besonders günstige Verhältnisse werden dann erreicht, wenn die Ausnehmung eine der Stärke der Stirnwand entsprechende Tiefe aufweist, weil in einem solchen Fall die Innenseite der Stirnwand mit der Innenseite der entsprechenden Mittelstückwand fluchtet. Da zufolge des Pumpendruckes der Schieberkörper in axialer Richtung belastet wird, wird die Stirnwand automatisch fest gegen die Ausnehmung gedrückt, was eine sichere Abdichtung in diesem Bereich nach sich zieht.

Um bei einer Umlenkung der Strömung vom Pumpendruckrohr zur Leitung günstige Strömungsverhältnisse zu schaffen, können entsprechende Führungsschaufeln vorgesehen werden, die jedoch fest mit dem Schieberkörper verbunden werden müssen. Zu diesem Zweck kann der Schieberkörper in weiterer Ausbildung der Erfindung wenigstens eine in der Ebene durch die Achsen des Mittelstückes und des Rohrstückes bzw. parallel dazu liegende Stützplatte für senkrecht dazu stehende Führungsschaufeln aufweisen, weil diese Stützplatten in der Strömungsrichtung liegen und daher kaum einen zusätzlichen Strömungswiderstand bilden.

Die richtige Funktion des Umschaltschiebers hängt von der richtigen Drehlage des Schieberkörpers ab, weil nur dann der eine Ast der Druckrohrleitung abgesperrt werden kann und die günstigen Strömungsverhältnisse sicherzustellen sind. Es muss daher für eine entsprechende Drehsicherung des Schieberkörpers vorgesorgt werden. Eine besonders günstige Konstruktion ergibt sich dabei dadurch, dass der Schieberkörper radial vorstehende Führungszapfen aufweist, die in eine in Verschieberichtung des Schieberkörpers verlaufende Nut eingreifen. Um nicht den Schieberkörper mit den Führungszapfen in das Gehäuse einfädeln zu müssen, sind schliesslich die Führungszapfen vorzugsweise durch nachträglich verschliessbare Montagebohrungen des Gehäuses in den Schieberkörper einschraubbar. In der Zeichnung ist der Erfindungsgegenstand in einem Ausführungsbeispiel schematisch dargestellt. Es zeigen

Fig. 1 einen erfindungsgemässen Umschaltschieber im Axialschnitt,

Fig. 2 einen Schnitt nach der Linie II–II der Fig. 1, jedoch mit geänderter Schieberstellung,

Fig. 3 einen Schnitt nach der Linie III–III der Fig. 1 und

Fig. 4 einen Schnitt im Bereich der Dichtung zwischen dem Schiebergehäuse und dem Schieberkörper im grösseren Massstab.

Der dargestellte Umschaltschieber besteht im wesentlichen aus einem in einem Gehäuse 1 mittels eines Servomotors 2 verstellbaren Schieberkörper 3, der aus einer Stirnwand 4 auf der einen Seite, einem Kreisring 5 und einer Mantelschale 6 zwischen der Stirnwand 4 und dem Kreisring 5 zusammengesetzt ist. Dieser Schieberkörper 3 ist in ein Rohrstück 7 eingesetzt, das einen Teil des Gehäuses 1 bildet und an das ein von einer Pumpe kommendes Druckrohr angeschlossen wird. Das Rohrstück 7 ist an das Mittelstück 8 eines Rohrkörpers angeschlossen, der zusammen mit dem Rohrstück 7 das Gehäuse 1 bildet. Dieses Mittelstück 8 besteht aus zu einem Rechteckquerschnitt zusammengesetzten Wänden 9 und 10, wobei sich zu den kreisförmigen Anschlussflanschen 11 für eine durchgehende Leitung entsprechende Übergangsstücke 12 ergeben.

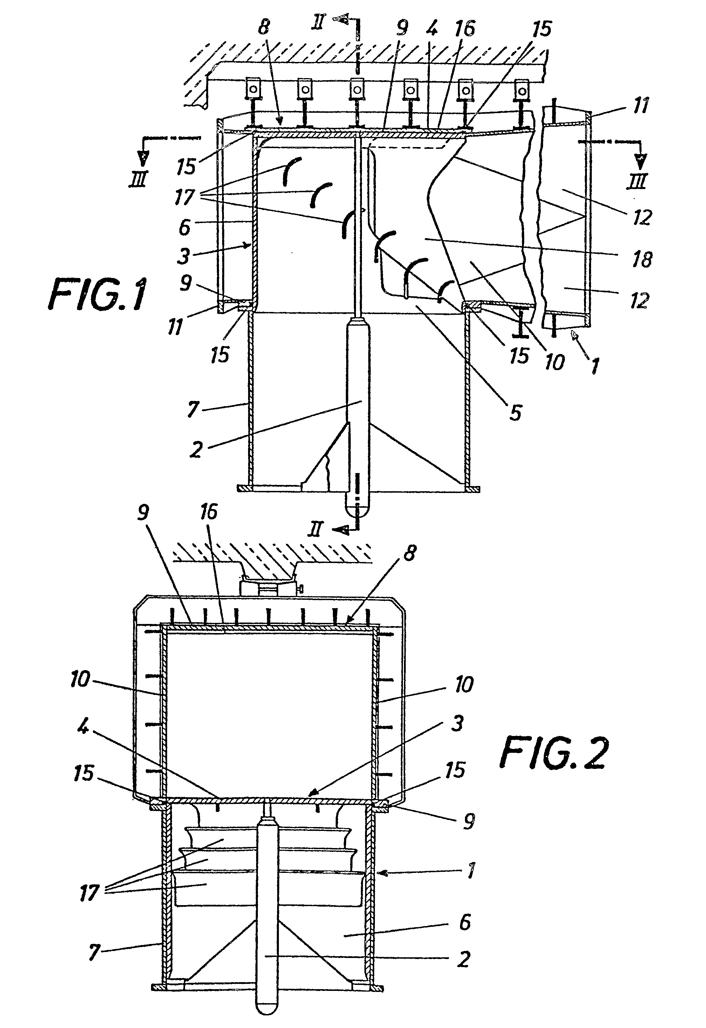

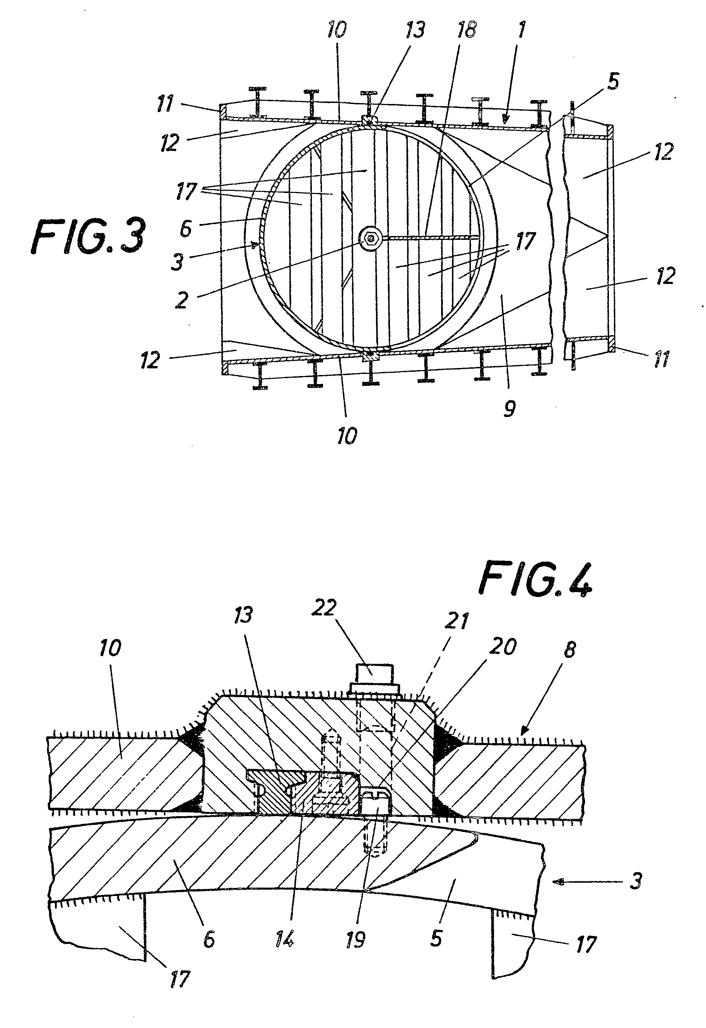

Da das Rohrstück 7 senkrecht an die entsprechende Wand 9 des Mittelstückes 8 angesetzt ist und einen der Querschnittslänge dieser Wand 9 entsprechenden Durchmesser aufweist, wie dies den Fig. 2 und 3 entnommen werden kann, berührt die Mantelschale 6 des Schieberkörpers 3 die Wände 10 des Mittelstückes 8 entlang von zwei Linien, so dass der Schieberkörper 3 auch entlang dieser Linien durch entsprechende Dichtungen 13 gegenüber den Wänden 10 des Mittelstückes 8 abgedichtet werden kann.

Wie Fig. 4 zeigt, können diese Dichtungen 13 mit Hilfe von Halteleisten 14 in einfacher Weise an den Wänden 10 befestigt werden.

Um eine vollständige Dichtung zu erhalten, muss der Schieberkörper 3 selbstverständlich auch gegenüber den Wänden 9 abgedichtet werden, was durch ringförmige, umlaufende Dichtungen 15 erfolgt, die im Bereich der Durchtrittsöffnung des Rohrstückes 7 zum Mittelstück 8 und im Bereich einer Ausnehmung 16 auf der gegenüberliegenden Wand 9 angebracht sind. In dieser Ausnehmung 16, deren Tiefe der Stärke der Stirnwand 4 des Schieberkörpers 3 entspricht, wird auf Grund des herrschenden Druckes die Stirnwand 4 in der in Fig. 1 dargestellten Schaltstellung des Schiebers gedrückt, so dass durch den Schieberkörper 3 tatsächlich ein dichter Verschluss des einen Leitungsastes erreicht wird. Wesentlich hiefür ist selbstverständlich, dass das Mittelstück 8 einen im wesentlichen rechteckigen Querschnitt besitzt. Wird der Schieberkörper 3 in das Rohrstück 7 zurückgezogen, so schliesst die Stirnwand 4 die Durchtrittsöffnung des Rohrstückes 7 zum Mittelstück 8 absatzlos ab, wie dies der Fig. 2 klar entnommen werden kann. Damit ist der freie Durchtritt durch die Leitung gewährleistet, die an die Anschlussflansche 11 anschliesst.

Um beim Umlenken der Strömung vom Rohrstück 7 in die an die Flansche 11 angeschlossene Leitung günstige Strömungsverhältnisse gewährleisten zu können, sind in den Schieberkörper 3 Führungsschaufeln 17 eingesetzt. Da die Mantelschale 6 des Schieberkörpers im wesentlichen von der durch die Achse des Rohrstückes 7 gehenden Querschnittsebene des Mittelstückes 8 begrenzt wird, was insbesondere den Fig. 3 und 4 entnommen werden kann, können die Führungsschaufeln 17 auch nur im Bereich der Mantelschale 6 ohne zusätzliche Hilfsmittel am Schieberkörper 3 befestigt werden. Ausserhalb der Mantelschale 6 werden die Führungsschaufeln 17 auf einer zwischen der Stirnwand 4 und dem Kreisring 5 angeordneten Stützplatte 18 befestigt, die in der Schnittebene der Fig. 1 liegt und auf dem Kreisring 5 befestigt ist, der sich im Ausführungsbeispiel durch einen entsprechenden Verlängerungsstreifen der Mantelschale ergibt.

Um den Schieberkörper 3 verdrehsicher mit Hilfe des Servomotors 2 verschieben zu können, trägt der Schieberkörper 3 Führungszapfen 19, die, wie dies in Fig. 4 dargestellt ist, in eine entsprechende Nut 20 im Schiebergehäuse eingreifen. Da das Einsetzen eines mit solchen radial vorstehenden Führungszapfen versehenen Schieberkörpers in das Gehäuse Schwierigkeiten bereiten könnte, können diese Führungszapfen 19 durch Montagebohrungen 21 im Schiebergehäuse in den Schieberkörper 3 eingeschraubt werden. Diese Montagebohrungen 21 müssen danach selbstverständlich mit einem Verschluss 22 abgedeckt werden.

**Patentansprüche**

1. Umschaltschieber zum Anschliessen einer Leitung an ein senkrecht einmündendes Druckrohr einer Pumpe, mit einem Gehäuse (1) und einem im Gehäuse mittels eines Motors (2) verstellbaren Schieberkörper (3), dadurch gekennzeichnet, dass das Gehäuse (1) aus einem in die Leitung einsetzbaren Rohrkörper mit einem hinsichtlich seines Querschnittes im wesentlichen rechteckigen Mittelstück (8) und aus einem senkrecht an eine Wand (9) des Mittelstückes (8) angesetzten, an die Pumpendruckleitung anschliessbaren, kreiszylindrischen Rohrstück (7) besteht, dessen Durchmesser der Querschnittslänge der Wand (9) entspricht, und dass der Schieberkörper (3) im kreiszylindrischen Rohrstück (7) axial verschiebbar geführt und aus einer koaxialen, halbkreiszylindrischen Mantelschale (6) sowie aus einer kreisförmigen Stirnwand (4) an der dem Mittelstück (8) zugekehrten Seite der Mantelschale (6) und einem Kreisring (5) an der gegenüberliegenden Seite zusammengesetzt ist.

2. Umschaltschieber nach Anspruch 1, dadurch gekennzeichnet, dass in der dem kreiszylindrischen Rohrstück (7) gegenüberliegenden Wand (9) eine Ausnehmung (16) zur Aufnahme der Stirnwand (4) des Schieberkörpers (3) vorgesehen ist.

3. Umschaltschieber nach Anspruch 2, dadurch gekennzeichnet, dass die Ausnehmung (16) eine der Stärke der Stirnwand (4) entsprechende Tiefe aufweist.

4. Umschaltschieber nach einem der Ansprüche 1 bis 3, dadurch gekennzeichnet, dass der Schieberkörper (3) wenigstens eine in der Ebene durch die Achsen des Mittelstückes (8) und des Rohrstückes (7) bzw. parallel dazu liegende Stützplatte (18) für senkrecht dazu stehende Führungsschaufeln (17) aufweist.

5. Umschaltschieber nach einem der Ansprüche 1 bis 4, dadurch gekennzeichnet, dass der Schieberkörper (3) radial vorstehende Führungszapfen (19) aufweist, die in eine in Verschieberichtung des Schieberkörpers (3) verlaufende Nut (20) des Gehäuses (1) eingreifen.

6. Umschaltschieber nach Anspruch 5, dadurch gekennzeichnet, dass die Führungszapfen (19) durch nachträglich verschliessbare Montagebohrungen (21) des Gehäuses (1) in den Schieberkörper (3) einschraubbar sind.

## Claims

1. A directional sliding valve for connecting a conduit to a pump discharge pipe, which opens into the conduit at right angles thereto, comprising a housing (1) and a sliding valve member (3), which is adjustable in the housing by means of a motor (2), characterized in that the housing (1) consists of a tubular body, which is adapted to be inserted into the conduit and has a central section (8) that is substantially rectangular in crosssection, and a circular cylindrical tubular member (7), which is attached to a wall (9) of the central section (8) and adapted to be connected to the pump discharge conduit and has a diameter that is equal to the length of the crosssection of the wall (9), and that the sliding valve member (3) is axially slidably guided in the circular cylindrical tubular member (7) and is composed of a substantially cylindrical shell part (6), a circular end wall (4) on that end of the shell part (6) which faces the central section (8), and a circular ring (5) at the opposite end.

2. A directional sliding valve according to claim 1, characterized in that the wall (9) which faces the circular cylindrical tubular member (7) is formed with recess (16) for receiving the end wall (4) of the sliding valve member (3).

3. A directional sliding valve according to claim 2, characterized in that the recess (16) has a depth which corresponds to the thickness of the end wall (4).

4. A directional sliding valve according to any of claims 1 to 3, characterized in that the sliding valve member (3) comprises at least one supporting plate (18) for guide vanes (17) extending at right angles thereto and said supporting plate (18) extends in or parallel to the plane which contains the axes of the central section (8) and of the tubular member (7).

5. A directional sliding valve according to any of claims 1 to 4, characterized in that the sliding valve member (3) has radially protruding guide pins (19), which extend into a groove (20), which is formed in the housing (1) and extends in the direction in which the sliding valve member (3) is slidable.

6. A directional sliding valve according to claim 5, characterized in that the guide pins (19) are adapted to be screwed into the sliding valve member (3) through assembly bores (21), which are formed in the housing (1) and can subsequently be closed.

## Revendications

1. Tiroir de commutation pour le raccordement d'une conduite à un tuyau de refoulement d'une pompe débouchant verticalement, comportant une enveloppe (1) et un corps de tiroir (3) réglable dans l'enveloppe au moyen d'un moteur (2), caractérisé par le fait que l'enveloppe (1) est formée d'un corps tubulaire pouvant s'insérer dans la conduite, présentant une partie centrale (8) pratiquement rectangulaire et un tronçon de tube cylindrique circulaire (7) adjoint perpendiculairement à une paroi (9) de la partie centrale (8), pouvant être raccordé au tuyau de refoulement de la pompe et dont le diamètre correspond à la longueur de section de la paroi (9) et que le corps de tiroir (3) est guidé de manière à pouvoir coulisser axialement dans le tronçon de tube cylindrique circulaire (7) et se compose d'une cuvette de chemise coaxiale (6) en forme de demicylindre circulaire, ainsi que d'une paroi frontale circulaire (4), du côté de la cuvette (6) de chemise qui est tourné vers la partie centrale (8) et d'un anneau circulaire (5) du côté opposé.

2. Tiroir de commutation selon la revendication 1, caractérisé par le fait que dans la paroi (9) opposée au tronçon de tube cylindrique circulaire (7) est prévu un évidement (16) pour loger la paroi frontale (4) du corps de tiroir (3).

3. Tiroir de commutation selon la revendication 2, caractérisé par le fait que l'évidement (16) présente une profondeur correspondant à l'épaisseur de la paroi frontale (4).

4. Tiroir de commutation selon l'une des revendications 1 à 3, caractérisé par le fait que le corps de tiroir (3) présente au moins une plaque de soutien (19), située dans le plan passant par les axes de la partie centrale (8) et du tronçon de tube (7), ou parallèle à ce plan, et destinée à des aubes de guidage (17) qui lui sont perpendiculaires.

5. Tiroir de commutation selon l'une des revendications 1 à 4, caractérisé par le fait que le corps de tiroir (3) présente des goujons de guidage (19) faisant saillie radialement qui s'engagent dans une rainure (20) de l'enveloppe (1), située dans la direction de coulissement du corps de tiroir (3).

6. Tiroir de commutation selon la revendication 5, caractérisé par le fait que les goujons de guidage (19) peuvent se viser dans le corps de tiroir (3) à travers des perforations de montage (21) prévues dans l'enveloppe (1) et pouvant être fermées après coup.

FIG.1

FIG.2

FIG.3

FIG.4